**Europäisches Patentamt**

**European Patent Office**

**Office européen des brevets**

(11) Veröffentlichungsnummer: **0 045 106**
**B1**

(12) **EUROPÄISCHE PATENTSCHRIFT**

(45) Veröffentlichungstag der Patentschrift:
**16.05.84**

(51) Int. Cl.³: **G 01 N 25/04**, G 01 W 1/14,
G 01 K 1/16, G 01 K 3/00

(21) Anmeldenummer: **81200779.7**

(22) Anmeldetag: **08.07.81**

(54) Einrichtung zum Bestimmen des Gefrierpunktes einer auf der Fahrbahn einer Strasse befindlichen oder von der Fahrbahn entnommenen Flüssigkeit.

(30) Priorität: **14.07.80 CH 5390/80**

(43) Veröffentlichungstag der Anmeldung:
**03.02.82 Patentblatt 82/5**

(45) Bekanntmachung des Hinweises auf die Patenterteilung:
**16.05.84 Patentblatt 84/20**

(84) Benannte Vertragsstaaten:
**AT DE FR GB SE**

(56) Entgegenhaltungen:
**DE - A - 1 573 287**
**DE - A - 2 224 166**
**DE - A - 2 254 351**

(73) Patentinhaber: **Boschung Mecatronic AG, Ried,
CH-3185 Schmitten (CH)**

(72) Erfinder: **Boschung, Marcel, Ried, CH-3185 Schmitten
(CH)**
Erfinder: **Zehnder, Walter, Lampertshalten, CH-1713 St.
Antoni (CH)**

(74) Vertreter: **Schweizer, Hans et al, Bovard AG
Patentanwälte VSP Optingenstrasse 16,
CH-3000 Bern 25 (CH)**

Einrichtung zum Bestimmen des Gefrierpunktes einer auf der Fahrbahn einer Straße
befindlichen oder von der Fahrbahn entnommenen Flüssigkeit

Die Erfindung betrifft eine Einrichtung gemäß dem Oberbegriff des Patentanspruches 1.

Wird eine Flüssigkeit abgekühlt und während dem Abkühlvorgang die Temperatur der Flüssigkeit laufend gemessen und gegen die Zeit aufgetragen, so fällt die Temperaturkurve (die sog. Erstarrungskurve) vorerst ab, steigt an einem Punkt schnell an und verläuft danach während einiger Zeit mehr oder weniger horizontal um anschließend weiter abzufallen. Dieser Vorgang ist beispielsweise auf der Seite 77 des Buches »Der Chemikant« von Dr. Fritz Merten, Ausgabe 1966 (Gebr. Jäneke-Verlag, Hannover) beschrieben.

Das Kühlen der zu untersuchenden Flüssigkeit und das Aufzeichnen des Temperaturverlaufes, beispielsweise mit Hilfe eines Schreibers, ist im Labor kein Problem. Es wäre selbstverständlich möglich, Proben der auf der Fahrbahn einer Straße vorhandenen Flüssigkeit ins Labor zu nehmen und den Gefrierpunkt dieser Proben zu bestimmen.

In DE-A-2 224 166 ist eine Einrichtung zum Anzeigen einer möglichen Vereisung beschrieben. Diese Einrichtung zeigt insbesondere an, wenn sich eine Lösung nahe bei ihrer Gefriertemperatur befindet. Zu diesem Zweck besitzt die bekannte Einrichtung eine erste und eine zweite Leitfähigkeitssonde, die an die Eingänge eines ersten Differentialverstärkers angeschlossen sind, eine erste und eine zweite Temperaturfühlerschaltung, die an die Eingänge eines zweiten Differentialverstärkers angeschlossen sind, und eine Kühlanlage zum Kühlen der ersten Leitfähigkeitssonde und der ersten Temperaturfühlerschaltung. Als Gefriertemperatur wird jene Temperatur angezeigt, welche die erste kühlbare Leitfähigkeitssonde im Zeitpunkt ihres Ansprechens aufweist. Ein Nachteil dieser bekannten Einrichtung ist, daß zur Ermittlung des Gefrierpunktes vier verschiedene Messungen, zwei Leitwertmessungen und zwei Temperaturmessungen an zwei verschiedenen Stellen vorgenommen werden müssen. Dadurch können die Fehler der vier Meßwerte das Resultat erheblich im negativen Sinne beeinflussen.

Zum Ermitteln derjenigen Temperatur, bei der die sich auf der Fahrbahn einer Straße befindliche Flüssigkeit, z. B. Regen- oder Schmelzwasser aus Schnee, in dem ein Taumittel gelöst ist, gefriert, ist bis heute keine einfache Einrichtung bekannt, mit welcher direkt an Ort und Stelle der Gefrierpunkt der genannten Flüssigkeit zuverlässig und bequem bestimmt werden kann.

Es ist Aufgabe der Erfindung, eine solche Einrichtung zu schaffen, mit der an Ort und Stelle der Gefrierpunkt einer auf der Fahrbahn einer Straße befindlichen oder von der Fahrbahn aufgenommenen Flüssigkeit zuverlässig, auf einfache Weise und innert kurzer Zeit bestimmt werden kann.

Diese Aufgabe wird bei einer Einrichtung der eingangs genannten Art durch die kennzeichnenden Maßnahmen des Patentanspruches 1 gelöst.

Ein Ausführungsbeispiel der erfindungsgemäßen Einrichtung eignet sich insbesondere zum Überwachen des Gefrierpunktes der auf der Straße befindlichen Flüssigkeit an einer bestimmten Stelle und ein weiteres Ausführungsbeispiel ist für den mobilen Einsatz gedacht, mit dem Messungen an beliebigen Stellen durchgeführt werden können.

Der Erfindungsgegenstand ist nachstehend mit Bezugnahme auf die Zeichnungen beispielsweise näher erläutert. Es zeigt

Fig. 1 die graphische Darstellung des Temperaturverlaufes in Funktion der Zeit einer Flüssigkeit, die über den Gefrier- bzw. Erstarrungspunkt hinaus abgekühlt wird,

Fig. 2 die Meßanordnung, mit welcher der Temperaturverlauf gemäß der Fig. 1 aufgenommen wurde,

Fig. 3 einen Teil der Kühlanordnung eines Ausführungsbeispieles der erfindungsgemäßen Einrichtung in der Draufsicht,

Fig. 4 einen Schnitt entlang der Linie IV-IV der Fig. 3,

Fig. 5 ein Blockschema eines Ausführungsbeispiels der erfindungsgemäßen Einrichtung,

Fig. 6 die graphische Darstellung des Abtastvorganges der Temperaturkurve,

Fig. 7 die vereinfachte Darstellung der Speicherplätze von drei Speichern des Mikroprozessors der Einrichtung gemäß der Fig. 5,

Fig. 8 ein Flußdiagramm, gemäß welchem die Einrichtung gemäß der Fig. 5 arbeitet und

Fig. 9 ein weiteres Flußdiagramm.

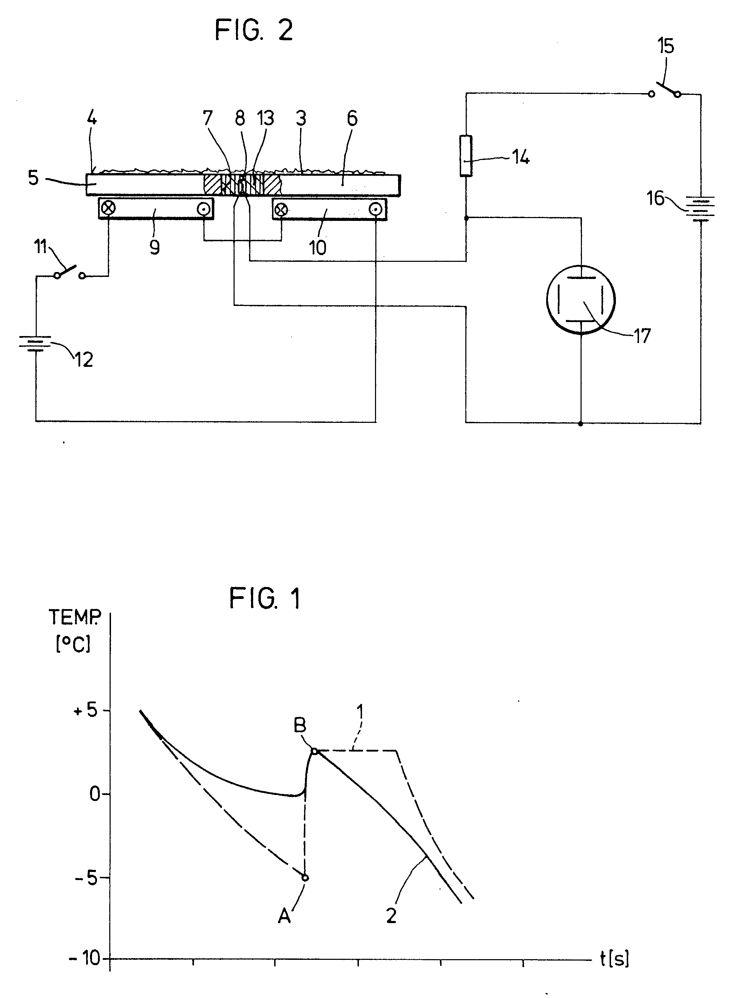

In der graphischen Darstellung der Fig. 1 ist auf der Abszisse die Zeit in Sekunden und auf der Ordinate die Temperatur in Grad C aufgetragen. Die gestrichelt gezeichnete Kurve 1 zeigt den Temperaturverlauf einer reinen Flüssigkeit, z. B. Wasser, während dem Abkühlvorgang. Mit zunehmender Abkühlung fällt die Temperatur bis zu einem Punkt A ab, danach erfolgt ein plötzlicher Temperaturanstieg bis zum Punkt B, anschließend bleibt die Temperatur eine Zeitlang konstant um schließlich erneut abzunehmen. Den starken Abfall der Temperatur der Flüssigkeit unter die Erstarrungstemperatur nennt man Unterkühlung. Diese ist ein Erstarrungsverzug und beruht auf einer verzögerten Auskristallisation, wenn keine Kristallkeime vorhanden sind. Die Erstarrungstemperatur bleibt nur dann über einen kurzen Zeitraum völlig konstant, wenn die abgekühlte Flüssigkeit völlig rein ist. Enthält die Flüssigkeit Verunreinigungen, so ergibt sich ein Temperaturverlauf gemäß der ausgezogenen Kurve 2.

Die Fig. 2 zeigt eine grundsätzliche Meßanordnung, mit der die Temperatur einer Flüssigkeit 3, mit der die Oberseite 4 einer Kühlanordnung 5 benetzt ist, sichtbar gemacht werden kann. Die Kühlanordnung 5 umfaßt eine metallische Kühlplatte 6, die in ihrem mittleren Bereich eine Aussparung 7 besitzt, in welcher ein schnell ansprechender Temperaturfühler 8 eingebettet ist, und zwei Peltierelemente 9 und 10. Die beiden Peltierelemente sind in Reihe geschaltet und können über einen Schalter 11 an eine Spannungsquelle 12 angeschaltet werden. Die Peltierelemente 9 und 10 befinden sich in einer wärmeleitenden Berührung mit der Kühlplatte 6 und bei geschlossenem Schalter 11 fließt ein Strom in einer solchen Richtung durch die Peltierelemente, daß die Kühlplatte 6 abgekühlt wird. Der Temperaturfühler, vorzugsweise ein NTC-Widerstand, ist in einer wärmeisolierenden Masse 13 eingebettet und somit gegenüber der Kältezone der Kühlplatte 6 wärmeisoliert, so daß der Temperaturfühler wirklich nur auf die Temperatur der sich über dem Temperaturfühler 8 befindlichen Flüssigkeit 3 und nicht auf die Temperatur der genannten Kältezone anspricht.

Der Temperaturfühler 8 ist über einen Widerstand 14 und einen weiteren Schalter 15 an eine zweite Spannungsquelle 16 anschaltbar. Der am Temperaturfühler 8 auftretende Spannungsabfall ist von der Temperatur der sich oberhalb des Temperaturfühlers 8 befindlichen Flüssigkeit abhängig und wird den vertikalen Ablenkplatten eines nur schematisch dargestellten nachleuchtenden Oszillographen 17 zugeführt. Die horizontalen Ablenkplatten des Oszillographen 17 sind mit einer nicht gezeichneten Zeitablenkschaltung verbunden, die den Leuchtpunkt während eines Kühlvorganges, d. h. während einer Zeit von 30 bis 60 s, einmal von links nach rechts ablenkt, so daß beispielsweise die Kurve 2 auf dem Schirm des Oszillographen 17 erscheint.

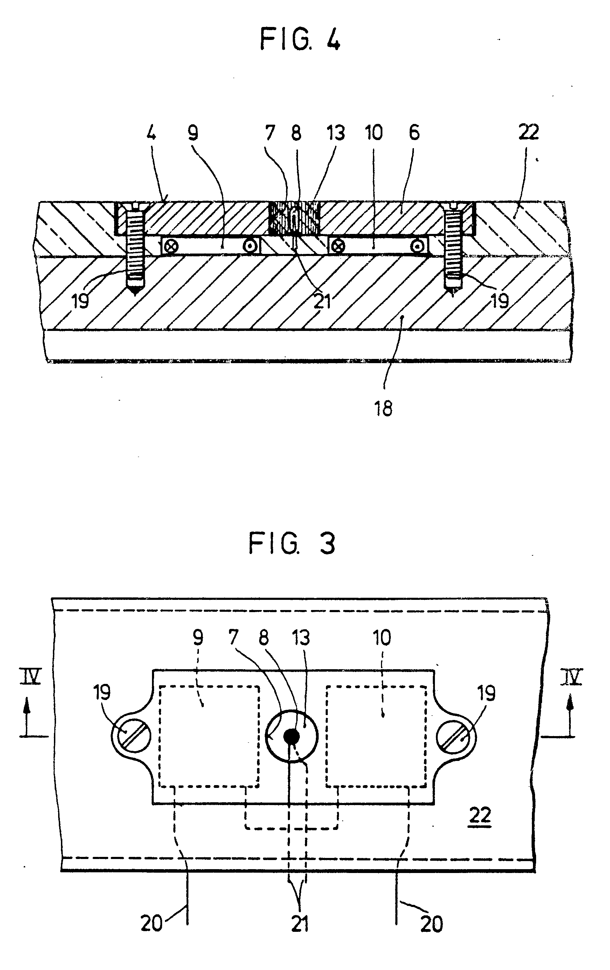

Die Fig. 3 zeigt die Draufsicht auf die Kühlanordnung eines Ausführungsbeispiels der erfindungsgemäßen Einrichtung und die Fig. 4 einen Schnitt entlang der Linie IV-IV der Fig. 3. Die eigentliche Kühlvorrichtung umfaßt die Kühlplatte 6 aus einem die Wärme gut leitenden Metall, z. B. Kupfer, und die zwei Peltierelemente 9 und 10. Die sich während des Betriebes der Peltierelemente 9 und 10 erwärmenden Seitenflächen derselben liegen an einem Kühlblock 18 aus einem die Wärme gut leitenden Metall, z. B. Kupfer, an. Der Kühlblock 18 nimmt die der Flüssigkeit entzogene Wärme und die Verlustwärme der Peltierelemente auf. Die sich im Betrieb der Peltierelemente abkühlenden Seitenflächen liegen an der Kühlplatte 6 an.

Damit zwischen den genannten Seitenflächen der Peltierelemente 9 und 10 sowie dem Kühlblock 18 einerseits und der Kühlplatte 6 andererseits ein guter Wärmeübergang vorhanden ist, sind die Peltierelemente 9 und 10 zwischen der Kühlplatte 6 und dem Kühlblock 18 eingeklemmt. Die Klemmwirkung wird durch zwei Schrauben 19 aufgebracht, mit denen die Kühlplatte 6 an dem Kühlblock 18 befestigt ist. Damit keine Wärmebrücken entstehen, sind die Schrauben 19 aus Kunststoff hergestellt. In der Aussparung 7, im mittleren Bereich der Kühlplatte 6, ist der Temperaturfühler 8 mittels der wärmeisolierenden Kunststoffmasse 13 so eingebettet, daß der Temperaturfühler 8 vor Nässe geschützt ist und daß sich der temperaturempfindliche Teil des Temperaturfühlers nahe an der Oberfläche der Kunststoffmasse 13 befindet, damit er möglichst schnell auf die Temperatur der darüber befindlichen Flüssigkeit anspricht.

Wie aus der Fig. 3 ersichtlich, sind die Peltierelemente 9 und 10 in Reihe geschaltet und die beiden übrigen Anschlüsse 20 der Peltierelemente sowie die beiden Anschlüsse 21 des Temperaturfühlers 8 sind seitlich nach außen geführt. Der Raum zwischen der durch die Außenseite 4 der Kühlplatte 6 definierten Ebene und der Oberseite des Kühlblockes 18 ist mit einem wärmeisolierenden Kunststoff 22 ausgefüllt, damit die Wärme durch die Peltierelemente 9 und 10 möglichst nur der Kühlplatte 6 entzogen wird.

Wenn die in den Fig. 3 und 4 dargestellte Kühlanordnung für den stationären Einsatz vorgesehen ist, wird die Kühlanordnung in die Fahrbahn einer Straße versenkt angeordnet, so daß die Oberseite 4 der Kühlplatte 6 bündig mit der Fahrbahnoberfläche ist und sich möglichst horizontal erstreckt. Die Kühlanordnung wird dann über ein vieradriges Kabel mit einer weiter unten beschriebenen Auswertevorrichtung verbunden, die das Bestimmen des Gefrierpunktes der auf der Fahrbahn der Straße bzw. auf der Kühlplatte 6 befindlichen Flüssigkeit erlaubt. Die der Flüssigkeit entzogene Wärme und die Verlustwärme der Peltierelemente 9 und 10 wird über den Kühlblock 18 in den Boden weitergeleitet.

Wenn die in den Fig. 3 und 4 dargestellte Kühlanordnung für den mobilen Einsatz vorgesehen ist, wird die Kühlanordnung so an einem Kontrollfahrzeug montiert, daß die Oberseite 4 der Kühlplatte 6 möglichst horizontal ist und daß der Kühlblock 18 in gutem, wärmeleitendem Kontakt, beispielsweise mit dem Rahmen des Fahrzeuges, steht. Um zu wissen, bei welcher Temperatur ein Salz-Schmutz-Flüssigkeitsgemisch auf der Straße gefriert, entnimmt man mittels einer Pipette oder einem Löffel eine kleine Menge dieses Flüssigkeitsgemisches und bringt sie auf die Kühlplatte, so daß die wärmeisolierte Zone, d. h. der Kunststoff 13, im mittleren Bereich der Kühlplatte 6 und zumindest Randbereiche um die mittlere Aussparung 7 durch das Flüssigkeitsgemisch bedeckt sind. Vorzugsweise wird das Flüssigkeitsgemisch mittels eines Fließblattes von der Fahrbahn aufgenommen und das vollgesogene Fließblatt auf die Kühlplatte 6 gelegt.

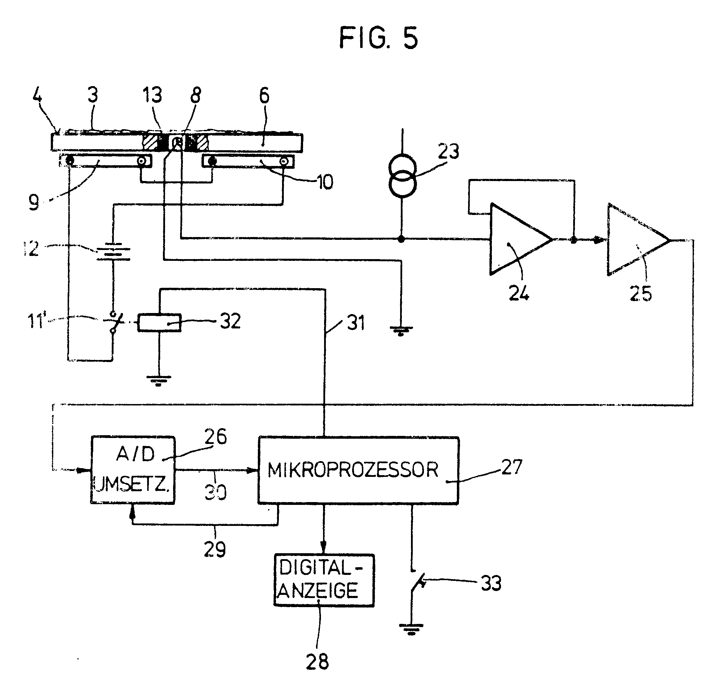

Sowohl beim stationären als auch beim mobilen Einsatz der Kühlanordnung wird mittels des Temperaturfühlers 8 der Temperaturverlauf während des Abkühlvorganges des auf dem Kunststoff 13 befindlichen Teiles der zu untersuchenden Flüssigkeit festgestellt und an die mit Bezug auf die Fig. 5 nachstehend beschriebene Auswertevorrichtung weitergegeben.

Anstelle der in der Fig. 2 gezeigten Auswertevorrichtung, die einen langnachleuchtenden Oszillographen enthält, umfaßt die in der Fig. 5 dargestellte Auswertevorrichtung eine Konstantstromquelle 23, einen Impedanzwandler 24, einen Meßverstärker 25, einen Analog/Digitalumsetzer 26, einen Mikroprozessor 27 und eine Digitalanzeige 28. Die Konstantstromquelle 23 ist in Reihe zum Temperaturfühler 8, der ein NTC-Widerstand ist, geschaltet. Der am Temperaturfühler 8 auftretende und von der gemessenen Temperatur abhängige Spannungsabfall wird dem Eingang des Impedanzwandlers 24 zugeführt. Der Impedanzwandler 24 steuert den Meßverstärker 25, welcher das der Erstarrungskurve proportionale Signal auf eine gewünschte Spannung verstärkt, so daß diese Spannung mit dem Analog/Digitalumsetzer 26 in ein digitales Signal umgewandelt werden kann. Der Mikroprozessor 27 gibt über eine Steuerleitung 29 periodische Anweisungen an den Analog/Digitalumsetzer 26, zu welchen Zeitpunkten er das vom Meßverstärker 25 erhaltene Analogsignal abtasten und in digitale Werte umsetzen und über einen Datenbus 30 in den Mikroprozessor 27 zum Speichern und Verarbeiten der digitalen Signale eingeben soll. Die in den Mikroprozessor 27 eingegebenen Daten werden von ihm auf eine weiter unten beschriebene Weise verarbeitet und das Resultat wird mittels der Digitalanzeige 28 sichtbar gemacht. Von der Digitalanzeige 28 kann die Temperatur des Gefrierpunktes der auf der Kühlplatte befindlichen Flüssigkeit direkt in Grad C abgelesen werden. Über eine weitere Steuerleitung 31 wird ein Relais 32 mit einem Arbeitskontakt 11', welcher dem Schalter 11 der in der Fig. 2 dargestellten Meßanordnung entspricht, vom Mikroprozessor 27 periodisch erregt. Dadurch wird jeweilen ein neuer Kühlvorgang eingeleitet, weil der Arbeitskontakt 11' die Peltierelemente 9 und 10 an die Spannungsquelle 12 anschaltet.

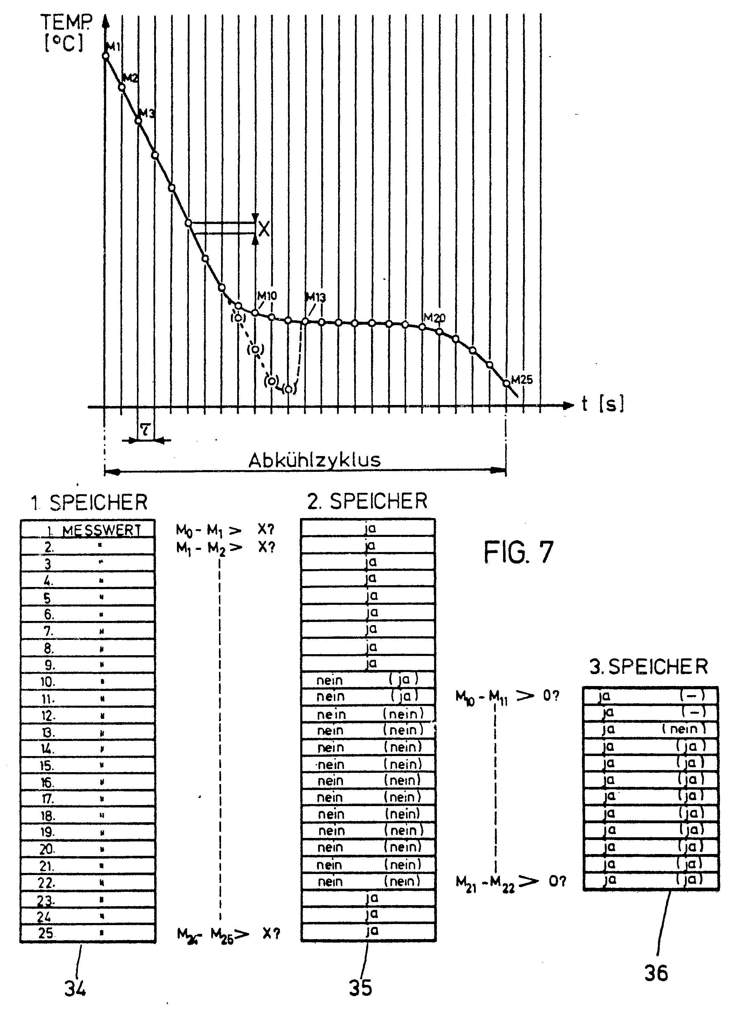

Mit Bezug auf die Fig. 6 und 7 ist nachstehend die Arbeitsweise der in der Fig. 5 dargestellten Einrichtung beschrieben. Die Fig. 6 zeigt den Verlauf der Temperatur desjenigen Teiles der Flüssigkeit, der sich oberhalb des Temperaturfühlers 8 befindet, während dem Kühlvorgang. Die Spannung am Ausgang des Meßverstärkers 25 zeigt denselben Verlauf. Die Ausdehnung der durch den wärmeisolierenden Kunststoff 13 gebildeten Wärmeinsel und die Kühlleistung der Peltierelemente 9 und 10 sind so gewählt, daß die sich auf der genannten Wärmeinsel befindliche Menge Flüssigkeit in einer Zeit von 30 bis 60 s so stark abgekühlt wird, daß sie erstarrt.

Der Mikroprozessor 27 ist so programmiert, daß er, wenn eine Starttaste 33 gedrückt wird, über die Steuerleitung 31 das Relais 32 erregt und damit den Kühlvorgang einleitet. Gleichzeitig ergibt er über die Steuerleitung 29 dem Analog/Digitalumsetzer 26 den Befehl, den ersten Meßwert $M_1$ in ein digitales Meßsignal umzusetzen und dieses ihm über den Datenbus 30 zuzuführen. Dieser Befehl wird während des ganzen Abkühlzyklus in gleichen Zeitintervallen $\tau$, z. B. alle 0,2 s wiederholt. Auf diese Weise werden alle Meßwerte, von denen in der Fig. 6 der Einfachheit wegen nur die Meßwerte $M_1$ bis $M_{25}$ dargestellt sind, im Verlaufe eines Arbeitszyklus in den Mikroprozessor 27 in der Form von digitalen Meßsignalen eingegeben. Nach dem Eingeben des letzten digitalen Meßsignales in den Mikroprozessor 27 wird das Relais 32 entregt und der Abkühlzyklus beendet.

Die mit einem kleinen Kreis dargestellten Meßwerte $M_1$ bis $M_{25}$ gehören zu einer Erstarrungskurve eines verschmutzten Flüssigkeitsgemisches wie es durch das auf der Fahrbahn einer Straße befindliche Wasser, in dem ein Taumittel gelöst und das mit Verunreinigungen vermischt ist, gebildet wird. Die mit einem kleinen Kreis in Klammern dargestellten Meßwerte sind jene, die erhalten werden, wenn praktisch nicht verunreinigtes Regenwasser dem Kühlvorgang unterworfen wird.

Der Mikroprozessor 27, der beispielsweise der Typ 8748 sein kann, enthält einen ersten, zweiten und dritten Speicher 34, 35 und 36. Diese Speicher sind in der Fig. 7 ganz schematisch dargestellt. Anstelle der drei Speicher kann auch ein großer Speicher mit drei getrennten Speicherbereichen verwendet werden. Der erste Speicher 34 umfaßt wenigstens so viele Speicherplätze, daß alle digitalen Meßsignale, die den Meßwerten $M_1$ bis $M_{25}$ entsprechen, gespeichert werden können. In dem ersten Speicher 34 werden sämtliche digitalen Meßsignale, die dem Mikroprozessor 27 während eines Abkühlzyklus über den Datenbus 30 zugeführt werden, gespeichert. Wenn ein Abkühlzyklus, z. B. 50 s beträgt und die Abtastintervalle 0,2 s sind, so werden im ersten Speicher 34 insgesamt 250 Meßwerte gespeichert. Die relativ kurzen Abtastintervalle $\tau$ sind notwendig, damit Temperatursprünge sicher erfaßt werden.

Nach dem Eingeben des zweiten Meßwertes in den ersten Speicher 34 wird die Differenz zwischen dem ersten und dem zweiten Meßwert ermittelt und mit einer Größe x verglichen. Das Resultat dieses Vergleiches, d. h. ob die ermittelte Differenz größer als die Größe x ist oder nicht, wird im zweiten Speicher 35, der auch Markierspeicher genannt werden kann, auf dem ersten Speicherplatz gespeichert, wobei beispielsweise die Binärzahl 1 ein »Ja« und die Binärzahl 0 ein »Nein« bedeutet. In gleicher Weise wird die Differenz zwischen jedem weiteren in den Speicher 34 eingelesenen Meßwert und dem unmittelbar vorangehend eingegebenen Meßwert gebildet und die erhaltene Differenz mit der Größe x verglichen und jeweilen das Resultat in den Speicher 35 eingegeben. Nach dem Durchführen eines Abkühlzyklus sind im zweiten Speicher 35 alle Vergleichsergebnisse, d. h. die Antworten ob die Differenz zwischen einem vorangehenden Meßwert $M_n$ und einem direkt nachfolgenden Meßwert $M_{n+1}$ größer ist als die Größe x oder nicht, gespeichert. Die im zweiten Speicher 35 in Klammern angeführten Antworten gelten für die Erstarrungskurve, deren Meßwerte mit (o) in der Fig. 6 angegeben sind. Das Ende des Abkühlzyklus wird durch einen nicht dargestellten Zeitüberwachungszähler bestimmt, indem er die Anzahl der an den Analog/Digitalumsetzer 26 abgegebenen Befehle zählt und nach Erreichen eines voreinstellbaren Zählwertes, im oben beschriebenen vereinfachten Fall beispielsweise 25, den Kühlvorgang beendet, indem das Relais 32 entregt wird.

Am Ende des Kühlvorganges wird mit der eigentlichen Auswertung der im ersten Speicher 34 gespeicherten Meßwerte $M_1$ bis $M_{25}$ begonnen.

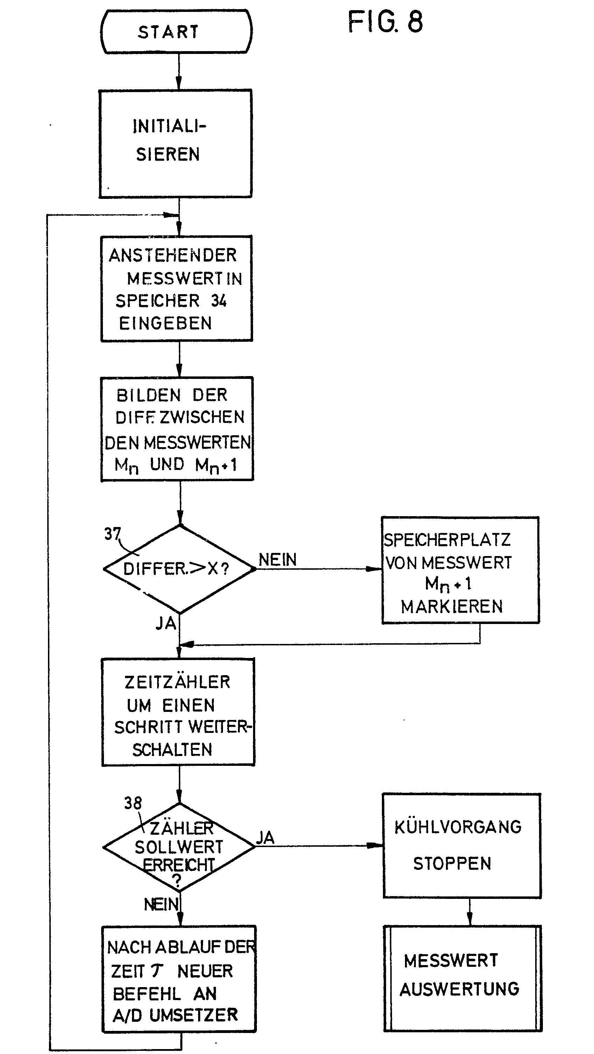

Die Arbeitsweise zum Eingeben und Speichern der Meßwerte in den ersten Speicher 34 und zum Markieren bestimmter Meßwerte der Einrichtung gemäß der Fig. 5 ist aus dem in der Fig. 8 dargestellten Flußdiagramm ersichtlich. Nach dem Betätigen der Starttaste 33 erfolgt die Initialisierung, d. h. der Analog/Digitalumsetzer 26 erhält den ersten Befehl zum Abtasten des ersten Meßwertes und zum Umsetzen des analogen Meßwertes in einen digitalen Meßwert, der dann über den Datenbus 30 dem Mikroprozessor 27 zugeführt und im ersten Speicher 34 gespeichert wird, der nicht dargestellte Zeitüberwachungszähler wird in seine Anfangsstellung verbracht, die Größe x wird gesetzt, das Relais 32 wird zum Einleiten des Kühlvorganges erregt und nach dem Ablauf der Zeit τ wird ein zweiter Befehl an den Analog/Digitalwandler 26 zum Abtasten des zweiten Meßwertes abgegeben.

Nach dem Initialisieren wird der am Datenbus anstehende zweite Meßwert in den Speicher 34 eingegeben. Alsdann wird die Differenz zwischen dem ersten Meßwert und zweiten Meßwert gebildet. In einer Entscheidungsstelle 37 wird entschieden, ob die Differenz größer als x ist oder nicht. Wenn die Differenz nicht größer ist als x wird dieser Zustand im zweiten Speicher festgehalten, welcher den Speicherplatz des Meßwertes $M_2$ markiert. Nach dem Markieren des betreffenden Speicherplatzes oder wenn die Entscheidungsstelle entscheidet, daß die Differenz größer ist als x, so wird der Zeitüberwachungszähler um einen Schritt weitergeschaltet und in einer weiteren Entscheidungsstelle 38 wird geprüft, ob der Zeitüberwachungszähler seinen Sollwert erreicht hat oder nicht. Wenn der Zähler seinen Sollwert noch nicht erreicht hat, so wird nach Ablauf der Zeit τ ein neuer Befehl an den Analog/Digitalumsetzer 26 abgegeben, wodurch der dritte Meßwert $M_3$ auf dem Datenbus 30 ansteht und der gleiche Vorgang, wie oben beschrieben, sich wiederholt, und zwar so lange, bis der Zählstand des Zeitüberwachungszählers seinen Sollwert erreicht. Wenn dies zutrifft, so wird der Kühlvorgang gestoppt, indem das Relais 32 entregt wird und unmittelbar danach wird die Auswertung der im ersten Speicher 34 gespeicherten und durch den zweiten Speicher 35 markierten Meßwerte eingeleitet.

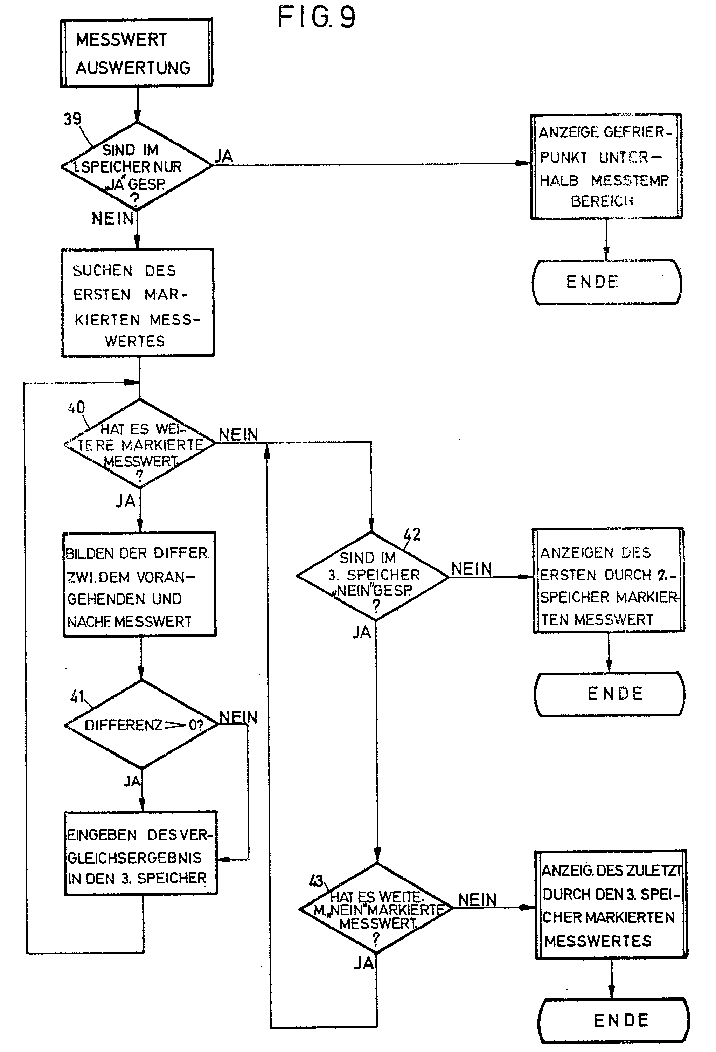

Der Auswertevorgang ist aus dem Flußdiagramm gemäß der Fig. 9 ersichtlich. Eine Entscheidungsstelle 39 überprüft, ob im zweiten Speicher 35 ausschließlich »Ja« gespeichert sind oder nicht. Wenn im Speicher 35 ausschließlich »Ja« gespeichert sind, so bedeutet dies, daß der Gefrierpunkt der getesteten Flüssigkeit unterhalb des untersuchten Temperaturbereiches liegt. Ist beispielsweise die Kühlanordnung so konzipiert, daß sie die Flüssigkeit bis auf minus 15°C abzukühlen vermag und im zweiten Speicher 35 an allen Speicherplätzen je ein »Ja« gespeichert ist, so bedeutet dies, daß der Gefrierpunkt der Flüssigkeit tiefer liegt als minus 15°C. Dieser Zustand kann beispielsweise durch die Anzeigevorrichtung 28 angezeigt werden, indem ein einzelnes oder mehrere Zeichen flackern. Nach dieser Anzeige ist sowohl der Kühlvorgang als auch die Auswertung der Meßwerte beendet.

Wenn die Entscheidungsstelle 39 feststellt, daß nicht nur »Ja« in den zweiten Speicher 35 gespeichert sind, so wird dadurch veranlaßt, daß der erste Meßwert im markierten Speicherbereich des Speichers 34 gesucht wird. Eine Entscheidungsstelle 40 prüft, ob noch weitere Speicherplätze durch den zweiten Speicher 35 im ersten Speicher 34 markiert sind. Stellt die Entscheidungsstelle 40 fest, daß noch weitere markierte Speicherplätze vorhanden sind, so wird die Differenz zwischen dem vorangehenden und dem nachfolgenden markierten Meßwert gebildet. In einer weiteren Entscheidungsstelle 41 wird geprüft, ob diese Differenz größer ist als 0. Das Vergleichsergebnis »Ja« oder »Nein« wird im dritten Speicher 36 gespeichert. Alsdann prüft die Entscheidungsstelle 40 erneut, ob weitere markierte Speicherplätze vorhanden sind. Dieser Vorgang wiederholt sich solange, bis die Entscheidungsstelle 40 feststellt, daß keine weiteren markierten Speicherplätze vorliegen. Wenn dies der Fall ist, so wird in einer Entscheidungsstelle 42 geprüft, ob im dritten Speicher 36 »Nein« gespeichert sind. Trifft dies nicht zu, so wird die Anzeige des ersten durch den zweiten Speicher 35 markierten Meßwertes eingeleitet. Dieser erste markierte Meßwert ist der erste Meßwert $M_{10}$ im angenähert horizontal verlaufenden Teil der in der Fig. 6 ausgezogen gezeichneten Kurve und gleichzeitig der Gefrierpunkt der getesteten Flüssigkeit. Mit der Anzeige des Gefrierpunktes ist sowohl der Kühlvorgang als auch der Auswertevorgang beendet.

Bemerkt die Entscheidungsstelle 42, daß im dritten Speicher 36 ein »Nein« vorhanden ist, so wird in einer weiteren Entscheidungsstelle 43 geprüft, ob noch weitere »Nein« im dritten Speicher gespeichert sind. Stellt die Entscheidungsstelle 43 fest, daß keine weiteren »Nein« gespeichert sind, so wird der durch dieses »Nein« markierte Meßwert aus dem ersten Speicher 34 ausgelesen und zur Anzeige gebracht. In dem in der Fig. 6 durch die Meßwerte (o) dargestellten Temperaturverlauf ist der durch das »Nein« im dritten Speicher 36 markierte Meßwert der Meßwert $M_{13}$, der als Gefrierpunkt angezeigt wird. Damit ist der Kühlvorgang und die Auswertung beendet.

Stellt die Entscheidungsstelle 43 fest, daß noch weitere »Nein« im dritten Speicher 36 enthalten sind, wird weiter geprüft bis keine weiteren »Nein« mehr im dritten Speicher 36 gespeichert sind. Mehrere »Nein« können im dritten Speicher 36 gespeichert sein, wenn die Temperatur nach der Unterkühlung nicht plötzlich sondern weniger steil ansteigt. Derjenige Meßwert, der durch das letzte »Nein« im dritten Speicher 36 markiert ist, wird aus dem ersten Speicher 34 ausgelesen und als Gefrierpunkt zur Anzeige gebracht. Damit ist der Kühlvorgang und die Auswertung beendet.

Der Mikroprozessor 27 ist vorzugsweise so programmiert, daß etwa alle 10 Minuten ein weiterer Kühlvorgang eingeleitet und entsprechende Auswertung vorgenommen wird.

Das oben mit Bezugnahme auf die Fig. 9 beschriebene Flußdiagramm ist eine von mehreren Möglichkeiten, um mit Hilfe des Mikroprozessors 27 die Kurvenform der Erstarrungskurve auszuwerten und den Gefrierpunkt digital anzuzeigen.

**Patentansprüche**

1. Einrichtung zum Bestimmen des Gefrierpunktes einer auf der Fahrbahn einer Straße befindlichen oder von der Fahrbahn entnommenen Flüssigkeit, mit einer Kühlvorrichtung und einer Einrichtung zum Messen der Temperatur der Flüssigkeit, welche Einrichtung an eine Auswertevorrichtung zum Ermitteln und Anzeigen des Gefrierpunktes der Flüssigkeit angeschlossen ist, dadurch gekennzeichnet, daß eine wärmeleitende Platte (6) mit der Kühlvorrichtung (9, 10) wärmeleitend verbunden ist, daß im mittleren Bereich der wärmeleitenden Platte (6) eine Aussparung (7) vorhanden ist, daß ein einziger Temperaturfühler (8) mittels einer wärmeisolierenden Masse (13) in der Aussparung (7) eingebettet ist und daß die Auswertevorrichtung Mittel (25, 26, 27, 28) zum Ermitteln und Anzeigen des Gefrierpunktes der Flüssigkeit in Abhängigkeit des aus einer Reihe von periodischen Temperaturmessungen abgeleiteten Temperaturgradienten aufweist.

2. Einrichtung nach Anspruch 1, dadurch gekennzeichnet, daß die Kühlvorrichtung zwei Peltierelemente (9, 10) umfaßt, daß ein Kühlblock (18) aus Metall vorhanden ist, daß die Peltierelemente (9, 10) zwischen der wärmeleitenden Platte (6) und dem Kühlblock (18) angeordnet sind und daß die sich bei Anlegen einer Spannung an die Peltierelemente (9, 10) erwärmende Seite der Peltierelemente (9, 10) am Kühlblock (18) zum Abführen der der Flüssigkeit entzogenen Wärme und der Verlustwärme anliegen.

3. Einrichtung nach Anspruch 2, dadurch gekennzeichnet, daß die wärmeleitende Platte (6) mittels Schrauben (19) aus Kunststoff am Kühlblock (18) befestigt ist und daß der Raum zwischen der durch die den Peltierelementen (9, 10) gegenüberliegende Außenseite der wärmeleitenden Platte (6) definierten Ebene und dem Kühlblock (18) mit einem wärmeisolierenden Kunststoff (22) ausgefüllt ist.

4. Einrichtung nach einem der Ansprüche 1 bis 3, dadurch gekennzeichnet, daß die Auswertevorrichtung einen Meßverstärker (25), einen Analog/Digitalumsetzer (26) und einen Mikroprozessor (27) enthält.

5. Einrichtung nach Anspruch 4, dadurch gekennzeichnet, daß der Mikroprozessor (27) einen ersten Speicher (34) zum Speichern einer Anzahl von Abtastwerten des Temperaturverlaufes der Flüssigkeit während des Abkühlvorganges, einen zweiten Speicher (35) zum Speichern der Vergleichsergebnisse, ob die Differenz zwischen einem vorangehenden Abtastwert und einem unmittelbar nachfolgenden Abtastwert einen Sollwert übersteigt oder nicht, und einen dritten Speicher (36) zum Speichern jener Vergleichsergebnisse, bei denen die Differenz den Sollwert nicht übersteigt, aufweist.

6. Einrichtung nach Anspruch 5, dadurch gekennzeichnet, daß der Mikroprozessor (27) für den stationären Einsatz der Einrichtung so programmiert ist, daß etwa alle 10 min ein Kühlvorgang eingeleitet und eine Auswertung vorgenommen wird.

7. Einrichtung nach Anspruch 5, dadurch gekennzeichnet, daß für den mobilen Einsatz der Einrichtung eine Starttaste (33) zum Einleiten eines Kühlvorganges und Durchführen einer Auswertung vorhanden ist.

**Claims**

1. Arrangement for determining the freezing point of a liquid situated on a roadway or taken from the roadway, having a cooling device and an arrangement for measuring the temperature of the liquid, which arrangement is connected to an evaluating device for ascertaining and indicating the freezing point of the liquid, characterized in that a heat-conductive plate (6) is heat-conductively connected to the cooling device (9, 10), that there is a recess (7) in the central region of the heat-conductive plate (6), that a single temperature sensor (8) is embedded in the recess (7) by means of a heat-insulating compound (13), and that the evaluating device comprises means (25, 26, 27, 28) for ascertaining and indicating the freezing point of the liquid as a function of the temperature gradient derived from a series of periodic temperature measurements.

2. Arrangement according to claim 1, characterized in that the cooling device comprises two Peltier elements (9, 10), that a cooling block (18) of metal is present, that the Peltier elements (9, 10) are disposed between the heat-conductive plate (6) and the cooling block (18), and that the side of the Peltier elements (9, 10) which heats up upon application of a voltage to the Peltier elements (9, 10) rests against the cooling block (18) for carrying off the heat withdrawn from the liquid and the dissipated heat.

3. Arrangement according to claim 2, characterized in that the heat-conductive plate (6) is secured to the cooling block (18) by means of screws (19) of plastics, and that the space between the plane defined by the outer side of the heat-conductive plate (6) opposite the Peltier elements (9, 10) and the cooling block (18) is filled up with a heat-insulating plastics material (22).

4. Arrangement according to one of the claims 1 to 3, characterized in that the evaluating device contains a measuring amplifier (25), an analog-to-digital converter (26), and a microprocessor (27).

5. Arrangement according to claim 4, characterized in that the microprocessor (27) comprises a first memory (34) for storing a number of scanning values of the course of the temperature of the liquid during the cooling operation, a second memory (35) for storing the results of the comparison whether the difference between a preceding scanning value and an immediately following scanning value exceeds a predetermined value or not, and a third memory (36) for storing those comparison results in which the difference does not exceed the predetermined value.

6. Arrangement according to claim 5, characterized in that the microprocessor (27) is programmed for stationary use of the arrangement in such a way that about every 10 min a cooling operation is initiated and an evaluation is undertaken.

7. Arrangement according to claim 5, characterized in that for mobile use of the arrangement, there is a start button (33) for initiating a cooling operation and carrying out an evaluation.

## Revendications

1. Dispositif pour la détermination du point de congélation d'un liquide se trouvant sur une route ou prélevé sur une route, comprenant un dispositif de refroidissement et un agencement pour mesurer la température du liquide, cet agencement étant connecté à un dispositif d'évaluation pour établir et indiquer le point de congélation du liquide, caractérisé en ce qu'une plaque conductrice de la chaleur (6) est connectée, de façon à conduire la chaleur, avec le dispositif de refroidissement (9, 10), en ce qu'un logement (7) est ménagé dans la région centrale de la plaque conductrice de la chaleur (6), en ce qu'un seul senseur de température (8) est enrobé dans le logement (7) au moyen d'un composé thermo-isolant (13), et en ce que le dispositif d'évaluation comprend des moyens (25, 26, 27, 28) pour établir et indiquer le point de congélation du liquide en fonction du gradient de température dérivé d'une série de mesures de température périodiques.

2. Dispositif selon la revendication 1, caractérisé en ce que le dispositif de refroidissement comprend deux éléments Peltier (9, 10), en ce qu'un bloc de refroidissement (18), de métal, est présent, en ce que les éléments Peltier (9, 10) sont disposés entre la plaque conductrice de la chaleur (6) et le bloc de refroidissement (18), et en ce que le côté des éléments Peitier (9, 10) qui chauffe sur application d'une tension à ces éléments Peltier (9, 10) est en appui contre le bloc de refroidissement (18) pour évacuer la chaleur soutirée du liquide et la chaleur de perte.

3. Dispositif selon la revendication 2, caractérisé en ce que la plaque conductrice de la chaleur (6) est fixée au bloc de refroidissement (18) à l'aide de vis (19) de matière synthétique, et en ce que l'espace entre le plan défini par la face extérieure de la plaque conductrice de la chaleur (6) opposée aux éléments Peltier (9, 10) et le bloc de refroidissement (18) est rempli avec un matériau synthétique thermoisolant (22).

4. Dispositif selon l'une des revendications 1 à 3, caractérisé en ce que le dispositif d'évaluation comprend un amplificateur de mesure (25), un convertisseur analogique/digital (26), et un micro-processeur (27).

5. Dispositif selon la revendication 4, caractérisé en ce que le micro-processeur (27) comprend une première mémoire (34) pour emmagasiner un nombre de valeurs d'échantillonnage de l'évolution de la température du liquide pendant le processus de refroidissement, une seconde mémoire (35) pour emmagasiner les résultats de comparaisons déterminant si la différence entre une valeur précédemment échantillonnée et une valeur immédiatement suivante excède ou non une valeur de consigne, et une troisième mémoire (36) pour emmagasiner ceux des résultats de comparaison pour lesquels la différence ne dépasse pas la valeur de consigne.

6. Dispositif selon la revendication 5, caractérisé en ce que le micro-processeur (27) est programmé pour l'utilisation stationnaire du dispositif de manière telle qu'une opération de refroidissement est engagée, et une évaluation est opérée, approximativement toutes les dix minutes.

7. Dispositif selon la revendication 5, caractérisé en ce que, pour une utilisation mobile du dispositif, un bouton de démarrage (33) est prévu pour engager une opération de refroidissement et l'exécution d'une évaluation.

# FIG. 2

# FIG. 1

## FIG. 4

## FIG. 3

# FIG. 5

TEMP. [°C]

M1
M2
M3

X

M10  M13      M20

M25

t [s]

τ

Abkühlzyklus

1. SPEICHER

| 1. MESSWERT |
| 2. |
| 3. |
| 4. |
| 5. |
| 6. |
| 7. |
| 8. |
| 9. |
| 10. |
| 11. |
| 12. |
| 13. |
| 14. |
| 15. |
| 16. |
| 17. |
| 18. |
| 19. |
| 20. |
| 21. |
| 22. |
| 23. |
| 24. |
| 25. |

$M_0 - M_1 > X?$
$M_1 - M_2 > X?$

$M_{24} - M_{25} > X?$

2. SPEICHER

| ja | |
| ja | |
| ja | |
| ja | |
| ja | |
| ja | |
| ja | |
| ja | |
| ja | |
| nein | ( ja ) |
| nein | ( ja ) |
| nein | (nein) |
| nein | (nein) |
| nein | (nein) |
| nein | (nein) |
| nein | (nein) |
| nein | (nein) |
| nein | (nein) |
| nein | (nein) |
| nein | (nein) |
| nein | (nein) |
| nein | (nein) |
| ja | |
| ja | |
| ja | |

$M_{10} - M_{11} > 0?$

$M_{21} - M_{22} > 0?$

FIG. 7

3. SPEICHER

| ja | ( — ) |
| ja | ( — ) |
| ja | ( nein ) |
| ja | ( ja ) |
| ja | ( ja ) |
| ja | ( ja ) |
| ja | ( ja ) |
| ja | ( ja ) |
| ja | ( ja ) |
| ja | ( ja ) |
| ja | ( ja ) |
| ja | ( ja ) |

34

35

36

0 045 106

FIG. 8

```
        ┌──────────────┐
        (    START     )
        └──────────────┘
               │
               ▼
        ┌──────────────┐
        │  INITIALI-   │
        │   SIEREN     │
        └──────────────┘
               │
      ┌────────┤
      │        ▼
      │  ┌──────────────┐
      │  │  ANSTEHENDER │
      │  │  MESSWERT IN │
      │  │ SPEICHER 34  │
      │  │  EINGEBEN    │
      │  └──────────────┘
      │        │
      │        ▼
      │  ┌──────────────┐
      │  │ BILDEN DER   │
      │  │ DIFF. ZWISCHEN│
      │  │DEN MESSWERTEN│
      │  │ Mn UND Mn+1  │
      │  └──────────────┘
      │        │
      │        ▼
      │   37  ◇ DIFFER.>X ?  ──NEIN──►  ┌──────────────┐
      │        │                        │ SPEICHERPLATZ│
      │        JA                       │ VON MESSWERT │
      │        │                        │    Mn+1      │
      │        ▼                        │  MARKIEREN   │
      │  ┌──────────────┐               └──────────────┘
      │  │  ZEITZÄHLER  │◄──────────────────────┘
      │  │  UM EINEN    │
      │  │SCHRITT WEITER-│
      │  │  SCHALTEN    │
      │  └──────────────┘
      │        │
      │        ▼
      │   38  ◇ ZÄHLER      ──JA──►  ┌──────────────┐
      │        SOLLWERT              │ KÜHLVORGANG  │
      │        ERREICHT?             │   STOPPEN    │
      │        │                     └──────────────┘
      │        NEIN                         │
      │        │                            ▼
      │        ▼                     ┌──────────────┐
      │  ┌──────────────┐            │   MESSWERT   │
      │  │NACH ABLAUF DER│           │  AUSWERTUNG  │
      │  │ ZEIT T NEUER │            └──────────────┘
      │  │  BEFEHL AN   │
      │  │ A/D UMSETZER │
      │  └──────────────┘
      │        │
      └────────┘
```

17

0 045 106

# FIG. 9